(19) Europäisches Patentamt / European Patent Office / Office européen des brevets

(11) **EP 4 712 049 A1**

(12) **DEMANDE DE BREVET EUROPEEN**

(43) Date de publication:
**18.03.2026   Bulletin 2026/12**

(21) Numéro de dépôt: **25196010.0**

(22) Date de dépôt: **14.08.2025**

(51) Classification Internationale des Brevets (IPC):
**G06V 20/58** $^{(2022.01)}$     **G06V 20/64** $^{(2022.01)}$

(52) Classification Coopérative des Brevets (CPC):
**G06V 20/58; G06V 20/64**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **17.09.2024   FR 2409881**

(71) Demandeur: AMPERE s.a.s.
**92100 Boulougne-Billancourt (FR)**

(72) Inventeurs:
• **CORTES, Ines**
  **28108 Alcobendas (ES)**
• **FERNANDEZ, Paula**
  **28108 Alcobendas (ES)**
• **GUINDEL, Carlos**
  **28400 Collado Villalba (ES)**
• **JIMENEZ, Dario**
  **28108 Alcobendas (ES)**
• **MILANES, Vicente**
  **47010 Valladolid (ES)**

(74) Mandataire: **Renault Group**
**Renault s.a.s.**
**1 avenue du Golf**
**FR TCR AVA 055**
**78084 Guyancourt Cedex (FR)**

(54) **PROCÉDÉ DE DÉTERMINATION D'UNE GÉOMÉTRIE EN TROIS DIMENSIONS D'UN CAMION SE DÉPLAÇANT DANS UN ENVIRONNEMENT D'UN VÉHICULE AUTOMOBILE**

(57)   Procédé de détection de camions et de modélisation en trois dimensions des camions détectés, comprenant des itérations des étapes suivantes :
- une acquisition d'au moins une image issue d'une caméra (201) équipant le véhicule automobile (100), et une détection de camions dans l'au moins une image comprenant une segmentation de l'au moins une image afin d'obtenir des données segmentées, puis
- une acquisition d'un nuage de points issus d'un lidar (202) équipant le véhicule automobile, et un filtrage du nuage de points représentant les camions identifiés dans les données segmentées, le filtrage permettant d'obtenir une instance de nuage de points pour chaque camion identifié, puis
- une détermination de contours de chaque camion identifié, comprenant une détermination de lignes de contours de chaque instance de nuage de points.

Fig. 1

## Description

L'invention concerne un procédé de détermination d'une géométrie en trois dimensions d'un camion se déplaçant dans un environnement d'un véhicule automobile. L'invention porte encore sur un dispositif de détermination d'une géométrie en trois dimensions d'un camion se déplaçant dans un environnement d'un véhicule automobile. L'invention porte également sur un programme d'ordinateur mettant en œuvre le procédé mentionné. L'invention porte enfin sur un support d'enregistrement sur lequel est enregistré un tel programme.

La détection par un véhicule autonome de véhicules se trouvant dans le trafic environnant est une tâche essentielle. Les véhicules autonomes analysent leur environnement afin de détecter et catégoriser des véhicules environnants, notamment à partir de leurs caractéristiques géométriques. Cependant, cette approche est problématique pour les types de véhicules dont la forme et la taille varient considérablement, ce qui est le cas notamment pour les camions.

Les approches s'appuyant sur l'utilisation de réseau de neurones en trois dimensions sont généralement défaillantes car les bases de données de roulage ont peu d'instances de camions, et il est donc impossible pour un réseau de neurones de les généraliser correctement. En outre, ces approches sont couteuses à implémenter.

Le but de l'invention est de fournir un procédé d'identification de camions et de modélisation de la géométrie en trois dimensions de camions détectés dans l'environnement d'un véhicule automobile qui soit simple à implémenter, notamment sans faire appel à des techniques d'identifications complexes basées sur les réseaux de neurones 3D, et fiable.

A cet effet, l'invention porte sur un procédé de détection de camions et de modélisation d'une géométrie en trois dimensions des camions détectés dans l'environnement d'un véhicule automobile

le véhicule automobile étant équipé d'un ensemble de capteurs comprenant un lidar et au moins une caméra,
le procédé comprenant des itérations des étapes suivantes :

- une étape d'acquisition d'au moins une image issue d'une caméra, et de détection de camions dans l'au moins une image comprenant une application d'un algorithme de segmentation de l'au moins une image afin d'obtenir des données segmentées, puis
- une étape d'acquisition d'un nuage de points issus du lidar, et de filtrage du nuage de points représentant les camions identifiés dans les données segmentées, le filtrage permettant d'obtenir une instance de nuage de points pour chaque camion identifié, puis

- une étape de détermination de contours de chaque camion identifié, comprenant une détermination de lignes de contours dans chaque instance de nuage de points filtrés.

Dans un mode de réalisation, l'étape d'acquisition et de détection comprend la mise en œuvre d'un algorithme de suivi des camions détectés dans des acquisitions successives.

Dans un mode de réalisation, les dimensions des lignes de contour déterminées sont utilisées pour déterminer une longueur et/ou une largeur et une direction de chaque camion identifié.

Dans un mode de réalisation, le procédé de détection de camions comprend en outre une étape de détermination d'une géométrie la plus probable de chaque camion détecté, comprenant une analyse statistique d'une dimension des lignes de contours du camion détecté.

Dans un mode de réalisation, l'analyse statistique comprend, pour chaque dimension donnée prise parmi une longueur d'un camion détecté et/ou d'une largeur d'un camion détecté et/ou une hauteur d'un camion détecté,

- une construction d'un histogramme représentant une distribution de mesures de ladite dimension donnée dans différentes classes, puis
- une détermination de la valeur la plus probable de ladite dimension comme étant la valeur la classe de l'histogramme qui regroupe le plus de mesures.

Dans un mode de réalisation, l'étape de détermination d'une géométrie la plus probable d'un camion comprend la suppression des lignes de contours détectées lorsque leur longueur est inférieure à une valeur limite inférieure, ou supérieure à une valeur limite supérieure.

Dans un mode de réalisation, l'étape de détermination d'une géométrie la plus probable de chaque camion détecté comprend :

- le calcul d'un score/indice de confiance associé à chaque mesure de la dimension donnée, et
- une détermination de la valeur la plus probable de la dimension donnée comme étant la mesure associée au score de confiance le plus élevé.

Dans un mode de réalisation, le score de confiance associé à une mesure donnée d'une dimension donnée d'un camion est calculé en fonction :

- d'un nombre total de mesures se situant dans la même classe de l'histogramme que la mesure donnée, et/ou
- d'un niveau de bruit estimé relatif au nuage de points représentant le camion, et/ou
- d'une proportion de points situés dans l'instance de nuage de points représentant le camion et dont le statut est indéterminé, notamment dont le statut n'est ni libre ni occupé.

L'invention porte en outre sur un dispositif de détection de camions et de modélisation d'une géométrie des camions détectés dans l'environnement d'un véhicule automobile équipé d'un ensemble de capteurs comprenant un lidar et au moins une caméra,
le dispositif comprenant des éléments matériels et/ou logiciels mettant en œuvre le procédé selon l'invention.

L'invention porte également sur un produit programme d'ordinateur comprenant des instructions de code de programme enregistrées sur un support lisible par ordinateur pour mettre en œuvre les étapes du procédé selon l'invention lorsque ledit programme fonctionne sur un ordinateur.

L'invention porte aussi sur véhicule automobile comprenant un dispositif selon l'invention.

Les dessins annexés représentent, à titre d'exemple, un mode de réalisation d'un dispositif de détection de camions et de modélisation de la géométrie de camions détectés selon l'invention et un mode d'exécution d'un procédé de détection de camions et de modélisation de la géométrie de camions détectés selon l'invention.

La figure 1 représente schématiquement un véhicule automobile équipé d'un dispositif de détection de camions et de modélisation de la géométrie de camions détectés selon l'invention.

La figure 2 définit un repère orthonormé direct du véhicule automobile selon l'invention.

La figure 3 illustre des classes d'objets pouvant être détectés dans l'environnement du véhicule automobile selon l'invention.

La figure 4 représente une image capturée par une caméra équipant le véhicule automobile selon l'invention.

La figure 5 représente une boîte englobante d'un camion situé dans l'environnement du véhicule automobile selon l'invention.

La figure 6 représente une pluralité de détections de boîtes englobantes.

La figure 7 représente une projection de points issus du lidar dans des boîtes englobantes déterminées à partir d'images issues d'une caméra.

La figure 8 illustre un traitement de suppression de bruit dans un cluster de points issus d'un lidar équipant le véhicule automobile selon l'invention.

La figure 9 illustre un traitement de suppression de bruit dans un cluster de points issus d'un lidar équipant le véhicule automobile selon l'invention.

La figure 10 représente les axes d'un lidar équipant le véhicule automobile selon l'invention.

La figure 11 représente une projection en vue de dessus des axes d'un lidar équipant le véhicule automobile selon l'invention.

La figure 12 représente une projection en vue de dessus de points issus du lidar déterminant des contours d'un camion.

La figure 13 représente deux segments de droites définissant un contour d'un camion, les segments étant obtenus par application de l'algorithme RANSAC à un ensemble de points issus du lidar.

La figure 14 illustre un point d'ancrage et un point extrême des segments définissant un contour d'un camion.

La figure 15 illustre un exemple d'histogramme portant sur la longueur d'un camion donné situé dans l'environnement du véhicule automobile selon l'invention.

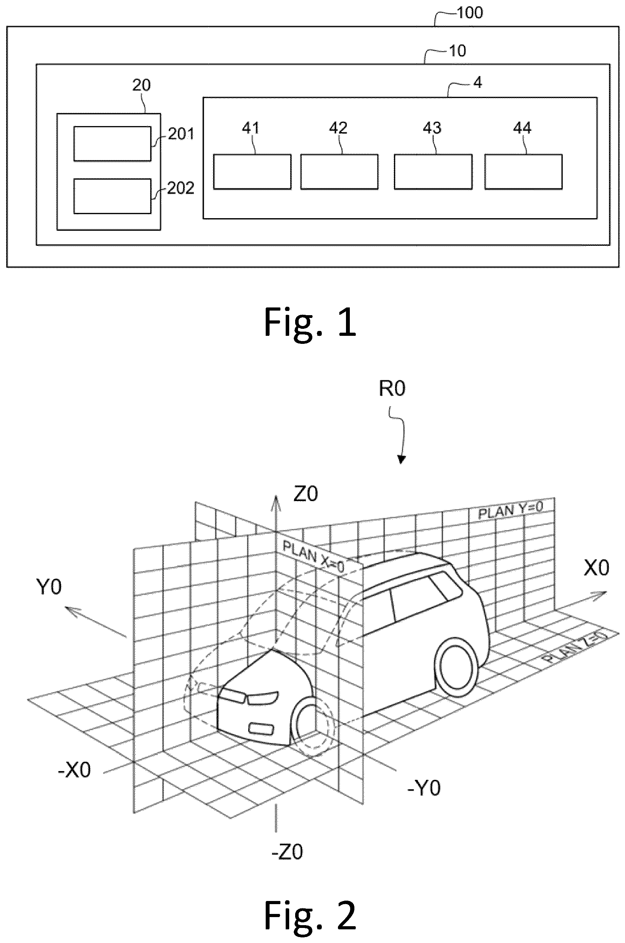

Un exemple d'un véhicule automobile 100 équipé d'un dispositif 10 de détection de camions et de modélisation de la géométrie de camions détectés dans un environnement du véhicule automobile 100 est décrit ci-après en référence à la figure 1.

En référence à la figure 2, on définit un premier repère orthonormé R0 direct (X0, Y0, Z0), l'axe X0 étant parallèle à l'axe longitudinal du véhicule automobile 100 et orienté vers l'arrière du véhicule automobile 100, l'axe Y0 étant transversal et dirigé vers la droite du véhicule, et l'axe Z0 étant vertical et orienté vers le haut du véhicule.

Le véhicule automobile 100 peut être un véhicule de tout type, par exemple un véhicule de tourisme ou un véhicule utilitaire.

Le dispositif 10 comprend un ensemble 20 de capteurs comprenant au moins une caméra 201 disposée à l'avant du véhicule. Préférentiellement, l'ensemble de capteurs comprend au moins deux caméras, voire au moins trois caméras. Dans un mode de réalisation, les caméras 201 peuvent être disposées à l'avant et/ou à l'arrière du véhicule automobile 100. Chaque caméra 201 génère des images RVB en deux dimensions d'une zone de l'environnement située dans le champ de ladite caméra.

L'ensemble de capteurs 20 comprend en outre un lidar 202 qui génère un nuage de points N_3D en trois dimensions. Dans un mode de réalisation préférentiel, le capteur lidar 202 est un capteur multiplan couvrant au moins seize plans.

De plus, la portée du lidar 202 selon un plan horizontal est supérieure ou égale à la portée des caméras 201 de l'ensemble de capteurs 20. En d'autres termes, le champ de vision des caméras 201 est couvert par le nuage de points N_3D générés par le lidar 202.

Des étalonnages des caméras 201 et du lidar 202 sont réalisés, notamment afin de pouvoir projeter un nuage de points N_3D en trois dimensions issues du lidar 202 sur des images I_2D en deux dimensions issues de l'une des caméras 201.

A cet effet, les caméras 201 sont d'abord étalonnées individuellement, on parle alors de paramètres d'étalonnage intrinsèque de la caméra. Dans un mode de réalisation, l'étalonnage intrinsèque est réalisé en utilisant un algorithme basé sur le modèle de sténopé de l'appareil photo. Le calibrage des paramètres intrinsèques de chaque caméra 201 comprend un traitement d'images, capturées sous différents angles, d'un objet comprenant une pluralité de points dont les coordonnées sont connues, l'objet étant généralement un damier. Ce traitement permet d'obtenir, pour chaque caméra 201, une matrice dite de caméra contenant la distance focale et les centres optiques et ainsi que des coefficients de distorsion, qui sont ensuite utilisés pour corriger la matrice de caméra précédemment obtenue afin d'éliminer les erreurs de distorsion.

Puis les caméras 201 et le lidar 202 sont étalonnés ensemble. Un étalonnage dit extrinsèque est réalisé entre les caméras et le lidar, afin que le nuage de points en trois dimensions N_3D issu du lidar puisse être projeté sur une image en deux dimensions I_2D issue d'une caméra. Les paramètres d'étalonnage extrinsèques entre les caméras 201 et le lidar 202 comprennent la position et de l'orientation de chaque capteur 201, 202, ce qui permet de définir une relation géométrique entre les différents capteurs.

Le dispositif 10 comprend par ailleurs un microprocesseur 4. Le microprocesseur 4 est apte à recevoir et traiter des données issues des caméras 201 et du lidar 202. Dans un mode de réalisation alternatif, le dispositif 10 pourrait comprendre plusieurs microprocesseurs 4 et les données issues des caméras 201 d'une part, et du lidar 202 d'autre part, peuvent être traitées sur deux microprocesseurs 4 distincts.

Dans un mode de réalisation, le microprocesseur 4 est connecté aux capteurs (caméras 201 et lidar 202) par l'intermédiaire d'un réseau de communication, par exemple un réseau Ethernet.

Le dispositif 10, et particulièrement le microprocesseur 4, permettent la mise en œuvre d'un procédé de détection et de détermination de la géométrie d'un camion. Il comprend principalement les modules 41, 42, 43, 44 suivants :

- un module 41 d'acquisition d'au moins une image issue d'une caméra, et de détection de camions dans l'au moins une image, le module collaborant avec au moins une caméra de l'ensemble de capteurs,
- un module 42 d'acquisition et de filtrage d'un nuage de points issus du lidar le module collaborant avec le lidar 202 de l'ensemble de capteurs,
- un module 43 de recherche de contours de chaque camion identifié, puis
- une module 44 de détermination d'une géométrie la plus probable de chaque camion détecté.

Le véhicule automobile 100, en particulier le dispositif 10 de détection d'un camion et de détermination d'une géométrie d'un camion, comprend de préférence tous les éléments matériels et/ou logiciels configurés de sorte à mettre en œuvre le procédé défini dans l'objet de l'invention ou le procédé décrit plus bas.

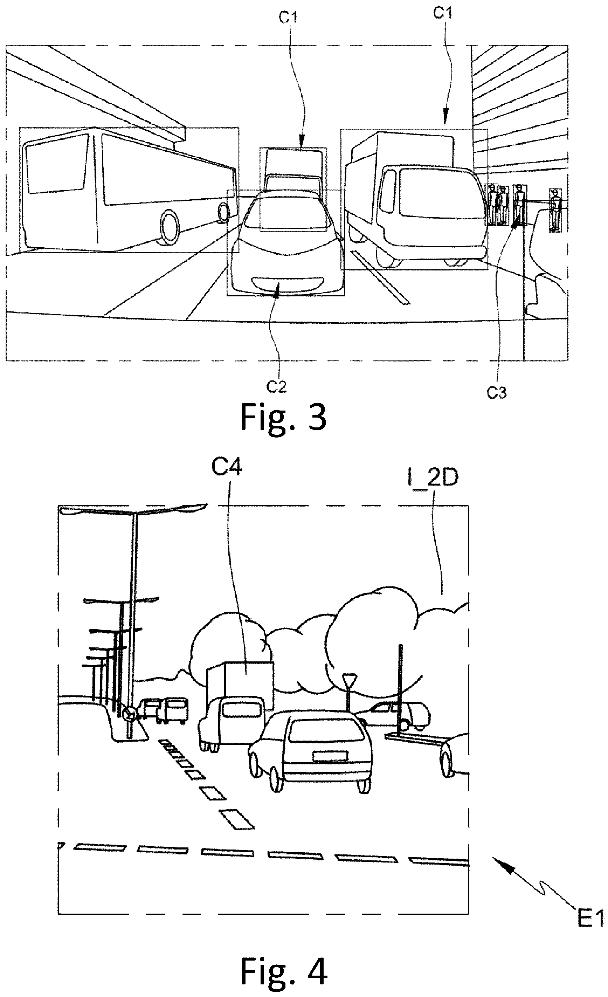

Un mode d'exécution du procédé de détermination d'une géométrie d'un camion est décrit ci-après en référence aux figures 3 à 15. Dans le mode de réalisation représenté par les figures 3 à 15, le procédé comprend des itérations sur quatre étapes E1 à E4.

Dans l'étape E1, on acquiert au moins une image issue d'une caméra, et on détecte des camions dans l'au moins une image.

A cet effet, dans l'étape E1 on met en œuvre des calculs permettant de détecter des camions représentés en deux dimensions dans l'image issue de la caméra 201. Notamment, on effectue une segmentation d'instance basée sur l'image, c'est-à-dire un traitement de détection et de catégorisation des éléments présents dans une scène 2D représentée par l'image issue de la caméra.

La segmentation d'instances est différente d'une détection conventionnelle d'objets, car la segmentation d'instances prédit les limites au niveau du pixel de chaque objet, tandis que la détection d'objets prédit uniquement l'emplacement approximatif d'un objet.

Le traitement dit de segmentation des instances permet de distinguer différentes instances d'une même classe et de les traiter comme des objets différents. La figure 3 illustre trois classes différentes d'objets, une classe C1 concernant les camions, une classe C2 concernant les voitures de tourisme, et une classe C3 concernant les piétons. Dans la figure 3, la classe des camions est représentée par deux instances, la classe des véhicules automobiles est représentée par une instance, et la classe des piétons est représentée par trois instances. Les camions sont notamment représentés par des masques d'instance (« instance masks » ou « bounding masks » en anglais) qui suivent les contours de la détection, et qui peuvent être approximés par des boîtes dites englobantes (en anglais « *bounding boxes* ») rectangulaires 2D pour plus de simplicité de manipulation.

Dans la suite du document, une boîte dite englobante d'un camion est un contour d'une surface plane représentant le camion dans une image issue de la caméra.

Dans la suite du document, le terme « instance » est utilisé pour désigner une représentation informatique modélisant un camion donné détecté dans l'image issue d'une caméra. Deux camions détectés comme distincts dans l'étape de segmentation de l'image sont représentés par deux instances distinctes.

Dans un mode de réalisation avantageux, un traitement de suivi est mis en œuvre pour chaque instance notamment pour chaque instance de camion. Le traitement de suivi a pour objectif de suivre un déplacement de chaque instance de camion. Un mode de réalisation du traitement de suivi est décrit ci-après.

Lors du traitement de segmentation d'une première image, on détermine les contours (ou boîtes englobantes) 2D de chaque camion détecté et on les enregistre dans une mémoire. Ensuite, un algorithme de suivi des déplacements des camions détectés est mis en œuvre par le traitement d'une succession d'images issues de la caméra 201. Notamment, une matrice de coûts de la détection peut être associée à chaque nouvelle image. Chaque cellule de la matrice de coûts est alors déterminée comme étant une distance calculée entre le centre correspondant de la boîte englobante de l'image courante et le centre de la boîte correspondante associée à un agent (lors de la précédente itération du suivi). A partir de la matrice de coûts ainsi obtenue, chaque centre d'une boîte englobante de l'image courante est associé à l'instance dont le coût est le plus bas, tant que ce coût reste inférieur à un seuil prédéfini. Avantageusement, on supprime les instances qui n'ont pas été associées à une boîte englobante pendant une nombre donné d'itérations. Par ailleurs, on ajoute de nouvelles instances qui n'avaient pas été détectées lors de précédentes itérations.

Le traitement de suivi des boîtes englobantes génère un tableau de détections, chaque détection contenant par exemple :

-   les coordonnées d'un point situé en haut à gauche de la boîte englobante du camion détecté,
-   les coordonnées d'un point situé en bas à droite de la boîte englobante du camion détecté,
-   les coordonnées d'un centre de la boîte englobante,
-   un numéro d'identification de l'agent (nommé également « ID de suivi ») fourni par le traitement de suivi.

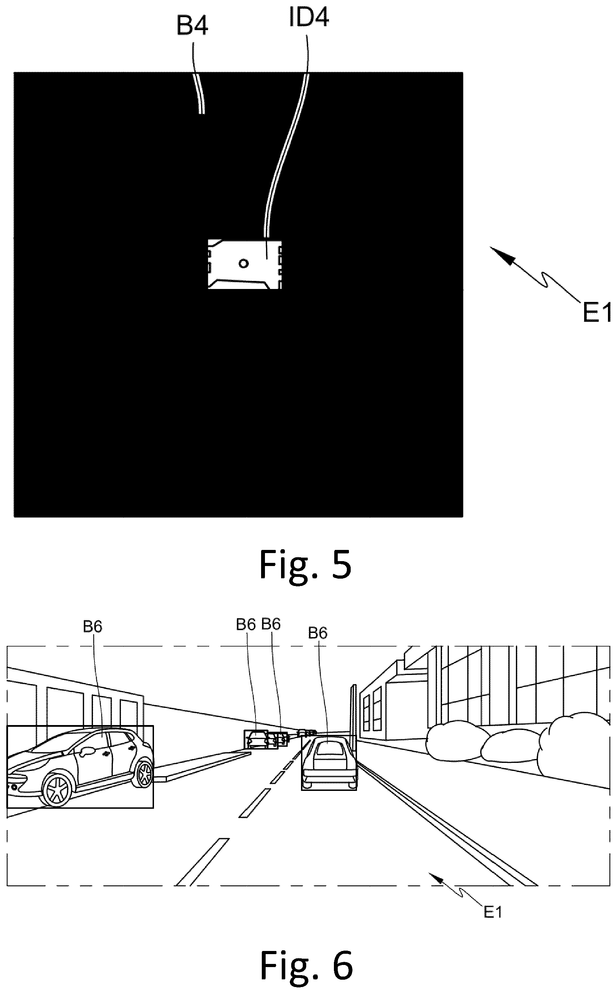

Un exemple de détermination d'une boîte englobante B4 est illustré par les figures 4 et 5. La figure 4 est une image en deux dimensions I_2D capturée par la caméra 201, l'image I_2D représentant notamment un camion C4. La figure 5 représente la boîte englobante B4 associée au camion C4 et à l'identifiant de suivi ID4 de la boîte englobante B4.

Dans l'étape E2, on acquiert et on filtre des nuages de points issus du lidar en les projetant dans les boîtes englobantes 2D précédemment définies dans la première étape E1. Le filtrage permet ainsi d'obtenir une instance de nuage de points en trois dimensions pour chaque camion qui a été détecté dans l'étape E1.

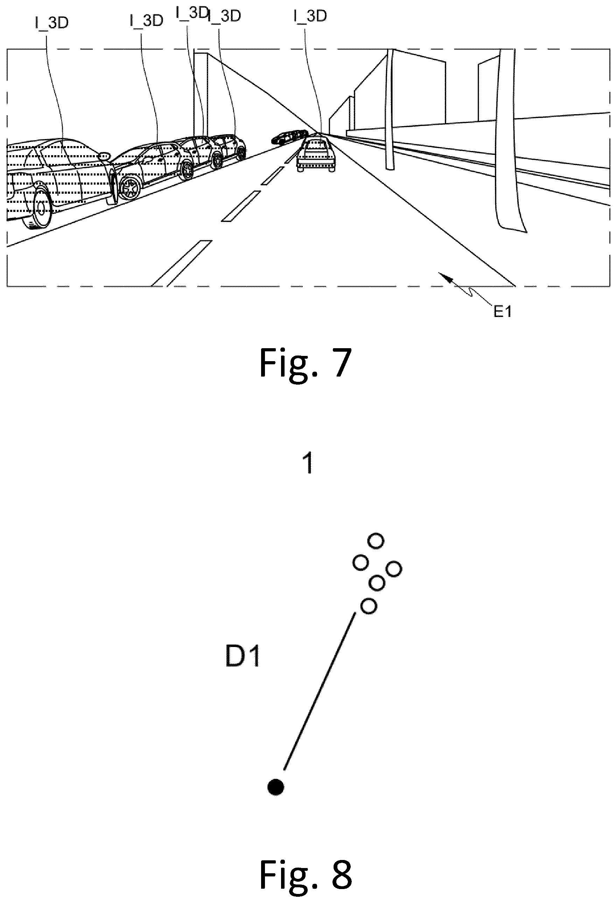

Par exemple, la figure 6 représente une pluralité de détections de boîtes englobantes B6 définies dans l'étape E1 à partir d'une ou plusieurs images issues de la caméra 201. La figure 7 représente une projection effectuée dans l'étape E2 d'un nuage N_3D de points issus du lidar dans les boîtes englobantes détectées lors de l'étape E1. On obtient alors plusieurs groupes de points certains groupes de points pouvant être du bruit. Par exemple, du fait de la portée du lidar, on peut détecter des objets situés derrière un camion, ce qui constitue du bruit. En d'autres termes, le bruit provient de points situés derrière un camion, et les points les plus proches proviennent toujours du camion.

Dans un mode de réalisation avantageux, un algorithme de clustering (ou regroupement) basé sur la distance euclidienne est utilisé pour supprimer le bruit, c'est à dire des fausses détections.

Dans un repère à deux dimensions, la distance euclidienne entre un point A de coordonnées (x1, y1) et un point B de coordonnées (x2, y2) est calculée selon la formule suivante :

$$D = \sqrt{(x_2 - x_1)^2 + (y_2 - y_1)^2}.$$

L'algorithme de clustering pouvant produire plusieurs sous-clusters, un critère de sélection est appliqué : seul le sous-cluster le plus proche du système d'enregistrement, c'est-à-dire du lidar 202, et comprenant au moins un nombre minimum de points est pris en compte pour les étapes suivantes.

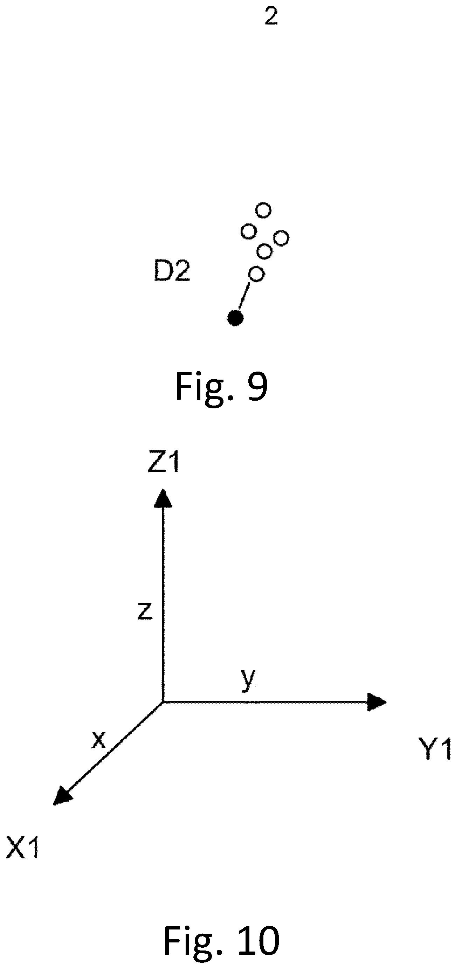

Les figures 8 et 9 illustrent le traitement de suppression de bruit. Sur la figure 8, la distance D1 mesurée entre un cluster de points et un premier point donné est importante, notamment supérieure à un seuil donné. Le premier point donné ne sera donc pas intégré au cluster. En revanche, sur la figure 9, la distance D2 mesurée entre le cluster de points et un deuxième point donné est faible, notamment inférieure à un seuil donné. Le deuxième point donné sera donc intégré au cluster.

A l'issue des étapes E1 et E2, on dispose d'une instance de nuage de points 3D filtré pour chaque objet.

Comme cela est illustré par la figure 10, les données LIDAR sont représentées dans un repère orthonormé direct (X1, Y1, Z1). L'étape E3 de détermination des contours de chaque camion identifié comprend, pour chaque instance de nuage de points 3D filtré :

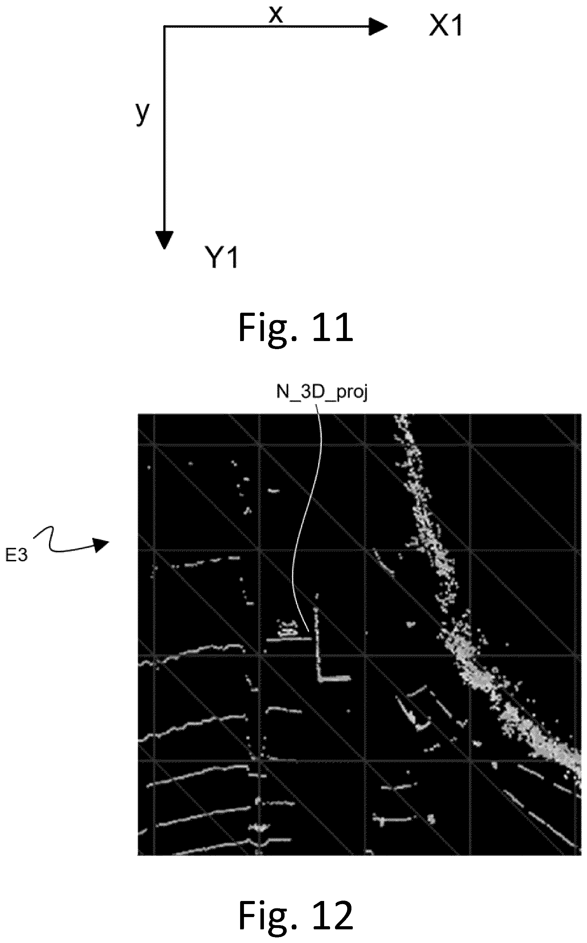

-   une sous-étape de mesure de la hauteur du camion, par exemple en mesurant l'écart entre la valeur minimum et la valeur maximum du nuage de points lidar associé à la détection de camion ;
-   une sous-étape de projection des points en trois dimensions issus du lidar 202 sur un plan contenant les axes X1 et Y1 du repère orthonormé direct associé au lidar (tel que représenté à la figure 11). En effet, la hauteur du camion étant connue, il n'est plus nécessaire de traiter la composante selon l'axe Z1 du nuage de points. Le nuage de points du lidar est donc transformé par l'intermédiaire d'une « vue à vol d'oiseau », c'est-à-dire une projection sur un plan (X1, Y1).

A cet effet, le nuage de points filtré est converti en un état appelé « vue à vol d'oiseau », où les points issus du lidar sont vus du dessus. Pour convertir les points dans cette vue, la coordonnée selon l'axe Z1 est supprimée. Les points issus du lidar sont ainsi représentés dans une image en deux dimensions.

La figure 12 illustre ainsi une vue à vol d'oiseau N_3D_proj des points du lidar qui ont été projetés sur un plan (X1, Y1).

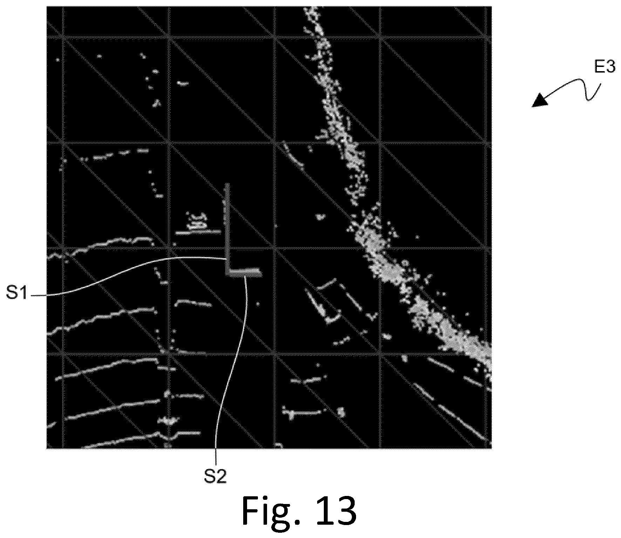

Puis, à partir d'une représentation à vol d'oiseau des points issus du lidar projetés dans la boite englobante, dans l'étape E3 on détermine des contours de chaque camion identifié, chaque contour étant défini dans le plan (X1, Y1). La figure 13 illustre un exemple d'un contour d'un camion construit à partir des points illustrés par la figure 12. Le contour du camion est défini par deux segments de droites S1, S2, un premier segment de droite S1 représentant la longueur du camion et un deuxième segment de droite S2 représentant la largeur du camion. Pour cela, on fait une recherche de premier segment et de deuxième segment définissant ensemble une forme correspondant à la lettre « L » (en anglais : « L-shape search »).

A cet effet, dans l'étape E3 il est possible d'utiliser l'algorithme RANSAC (acronyme de RANdom SAmple Consensus) qui est une méthode itérative de calcul permettant d'estimer un modèle mathématique à partir d'un ensemble de données pouvant contenir des valeurs aberrantes, pour identifier un ou plusieurs segments de droite dans le nuage de points. Dans le mode de réalisation décrit, le modèle mathématique est préalablement défini comme étant une droite, définie par une équation d'une droite (y = mx + c).

L'algorithme RANSAC sélectionne un sous-ensemble aléatoire de points et tente d'ajuster le modèle au sous-ensemble aléatoire de points. Lorsqu'un ratio entre les valeurs non aberrantes et les valeurs aberrantes est supérieur à un seuil prédéfini, le modèle de droite a été trouvé.

Dans la mise en œuvre de l'invention, l'algorithme RANSAC est ainsi appliqué une première fois pour définir le premier segment S1, puis une deuxième fois pour définir le deuxième segment S2. Le même algorithme peut également être mis en œuvre pour déterminer la hauteur du camion. Cependant, les mesures selon l'axe des Z sont moins bruitées que celles selon les axes X et Y, et les performances obtenues en déterminant la hauteur du camion directement dans le nuage de points lidar filtré sont généralement suffisantes.

Lorsque le camion n'est que partiellement visible, l'algorithme RANSAC peut ne déterminer qu'un seul segment au lieu de deux segments. Dans ce cas, il n'est pas possible d'obtenir les dimensions complètes : il manque la longueur ou la largeur du camion. Cependant, les dimensions manquantes peuvent être retrouvées, par exemple en mettant en œuvre une étape avantageuse d'association d'identifiants de suivi à un histogramme généré selon la méthode décrite ci-après à partir d'acquisitions successives.

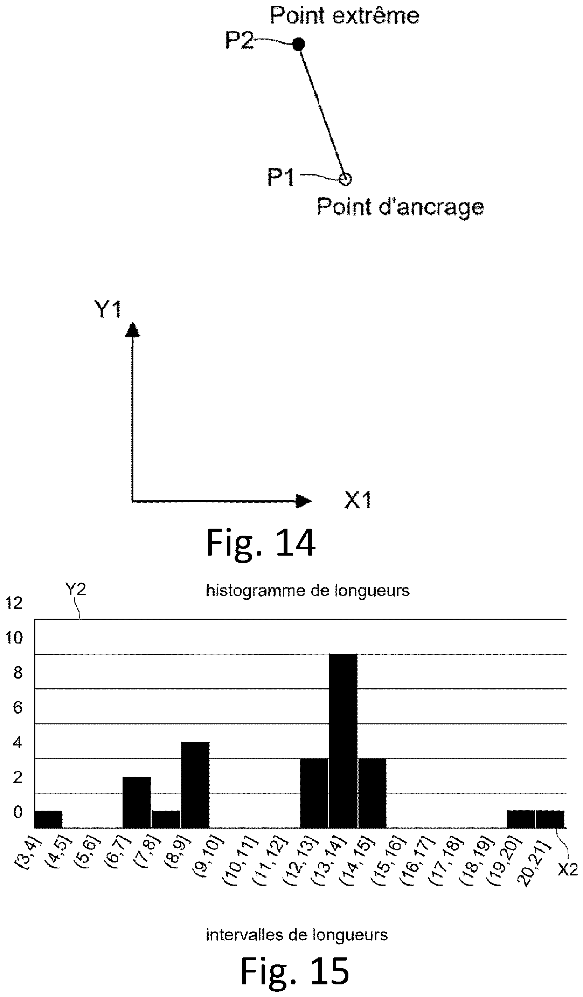

Comme cela est illustré par la figure 14, après détermination du premier segment S1 et/ou du deuxième segment S2, les lignes détectées peuvent être analysées afin de déterminer s'il s'agit d'une longueur ou d'une largeur du camion, et pour déterminer la direction du camion. Une manière de réaliser cette analyse consiste à déterminer, pour chaque segment :

- un point P1 le plus proche du lidar, nommé point d'ancrage, le point d'ancrage étant défini par son abscisse x_anchor et son ordonnée y_anchor,
- un point P2 le plus éloigné du lidar, nommé « point extrême », le point extrême étant défini par son abscisse x_farthest et son ordonnée y_farthest.

Les longueurs des segments sont obtenues par une mesure de distance entre le point d'ancrage et le point extrême.

A partir des coordonnées du point d'ancrage P1 et du point extrême P2, on calcule une direction de déplacement du camion, également nommée « heading » ou « cap », grâce à la formule suivante :

$$heading = tan^{-1}\left(\frac{y_{anchor} - y_{farthest}}{x_{anchor} - x_{farthest}}\right)$$

Lorsqu'un segment pris parmi le premier ou le deuxième segment S1, S2 est plus long qu'un seuil de longueur minimal (le seuil minimal étant défini par l'expérimentation), ledit segment est classé comme étant le côté longitudinal du camion ; sinon, il est classé comme étant une largeur mesurée à l'arrière du camion. La longueur et la largeur du camion sont ainsi connues.

L'attribution d'identifiants aux détections, et le suivi des détections sur des acquisitions successives des capteurs permet d'affiner les mesures et de retrouver les segments manquants sur certaines acquisitions.

Dans les systèmes comprenant au moins deux caméras, la détection simultanée d'un camion par deux caméras est susceptible de générer deux détections de camions présentant des identifiants de suivi différents. Pour éviter cela, chaque détection de camion peut donner lieu à une vérification permettant de s'assurer que ledit camion n'est pas déjà identifié par l'autre caméra. Lorsque le système selon l'invention comprend trois caméras dont une frontale (la caméra frontale étant disposée à l'avant du véhicule automobile), alors l'identifiant du camion peut être par exemple celui qui lui est attribué par la caméra frontale.

Dans une configuration à 360 degrés mettant en œuvre six caméras :

- la caméra frontale peut attribuer les identifiants de suivi des camions détectés par les caméras situées à l'avant du véhicule, parmi lesquelles les caméras latérales avant, et
- la caméra arrière peut attribuer les identifiants de suivi des camions détectés par les caméras situées à l'arrière du véhicule, parmi lesquelles les caméras latérales arrière,

la caméra frontale et la caméra arrière jouant le rôle de caméras dites « de référence ».

Des critères d'attribution d'identifiants différents peuvent être adoptés pour d'autres configurations.

Dans un mode de réalisation avantageux, l'ensemble des points issus d'une caméra de référence sont codés, chaque point faisant partie d'un camion étant codé par un booléen dont la valeur est « VRAI », les autres points étant codés par un booléen dont la valeur est « FAUX ».

L'ensemble des points ainsi codés à partir du champ de vision de la caméra de référence, est comparé à un ou plusieurs ensembles de points dit « locaux », qui sont détectés dans les champs de vision d'une ou plusieurs autres caméras équipant le véhicule. Si un ensemble de points dits locaux et l'ensemble de points issus de la caméra de référence partagent au moins un nombre donné de points communs, les points locaux et les points de référence sont considérés étant associées au même camion et l'identifiant de suivi qui a été attribué aux points issus de la caméra de référence est également associé aux deux détections de ce camion.

Dans l'étape avantageuse E4, on détermine la géométrie la plus probable de chaque camion détecté.

A cet effet, l'étape E4 peut comprendre la suppression des lignes de contours détectées dont les dimensions sont inférieures à une borne inférieure ou supérieure à une borne supérieure. Ces limites peuvent être données par un cadre légal, par une connaissance des dimensions des camions ou par l'expérimentation. Cette étape de filtrage permet de supprimer les dimensions irréalistes.

Avantageusement, l'étape E4 peut comprendre une analyse statistique d'une longueur des lignes de contours détectées.

Notamment, l'analyse statistique peut comprendre, pour chaque dimension donnée prise parmi une longueur d'un camion détecté et/ou d'une largeur d'un camion détecté et/ou une hauteur d'un camion détecté,

- la construction d'un histogramme représentant une distribution de ladite dimension donnée, puis
- la détermination de la valeur la plus probable de ladite dimension comme étant la valeur la plus fréquente de l'histogramme.

Un exemple d'histogramme portant sur la longueur d'un camion donné situé dans l'environnement du véhicule automobile 100 est illustré par la figure 15. L'axe X2 des abscisses représente des valeurs de longueurs exprimées en mètres, les valeurs étant discrétisées selon un pas d'un mètre. L'axe Y2 des ordonnées représente le nombre d'occurrences des différents intervalles de longueurs représentés sur l'axe des abscisses, obtenues pour un même camion sur des acquisitions successives. Sur l'histogramme représenté par la figure 15, la longueur la plus fréquemment mesurée pour le camion donné est comprise entre 13 et 14 mètres.

Cette approche statistique permet de corriger des mesures erronées d'une dimension d'un camion donné causées par des occlusions ou d'autres erreurs.

L'étape E4 permet de construire, pour chaque camion détecté et pour chaque dimension du camion détecté, un histogramme prenant en compte l'historique de mesures de la longueur ou de la largeur ou de la hauteur du camion identifié par son identifiant de suivi. L'axe des abscisses correspond à une dimension spécifique exprimée en mètres (longueur, largeur ou hauteur), et l'axe des ordonnées représente le nombre d'occurrence d'une valeur de la dimension spécifique comprise dans une plage de valeurs. Comme les dimensions d'un camion sont exprimées par des nombres réels, il est presque impossible que les dimensions soient identiques sur deux mesures distinctes, notamment lorsque les mesures sont calculées à partir de données issues de plusieurs capteurs distincts. Ainsi, les valeurs de dimensions, exprimées selon l'axe des abscisses de l'histogramme, sont discrétisées. Des pas de 0,5 mètre et un mètre ont été testés.

Cette approche statistique permet également de retrouver les dimensions d'un camion qui n'ont pas pu être déterminées sur une acquisition donnée, à partir de l'ensemble des acquisitions réalisées à des instants différents pour le même camion.

En amont ou en aval de la construction d'un histogramme, deux méthodes de calcul des dimensions d'un camion peuvent être utilisées.

Selon une première méthode, on élimine tout d'abord les valeurs aberrantes de longueur et/ou de largeur et/ou de hauteur obtenues par comparaison à un seuil minimal et un seuil maximal, ces seuils pouvant être par exemple des seuils définis par la loi. Les valeurs non réalistes sont ainsi éliminées. Ensuite, la plage de valeurs correspondant au plus grand nombre d'occurrences est sélectionnée, puis la moyenne des valeurs de cette plage est utilisée comme valeur finale. Cette approche supprime les valeurs aberrantes causées par des occlusions ou des erreurs de détection. Toutefois, dans certaines circonstances, par exemple lorsqu'un camion est toujours partiellement occulté, il existe un risque que la valeur la plus répétée provienne d'une détection occultée et les dimensions mesurées pour ce camion seront alors incorrectes.

En complément de la première méthode, ou alternativement à la première méthode, on peut appliquer une deuxième méthode, dans laquelle on associe une note, correspondant à un score de confiance, à chaque mesure donnée de longueur, de largeur ou de hauteur.

Un mode de calcul d'une note est décrit ci-après. Pour plus de clarté, on décrit ci-après la méthode de notation appliquée à la mesure d'une longueur d'un camion donné.

Dans le mode de réalisation décrit, le calcul de la note prend en compte trois paramètres :

- La note initiale attribuée à la mesure donnée de la longueur du camion donné est égale au nombre total de mesures se situant dans la plage de valeurs de la mesure donnée. Par exemple, en référence à l'histogramme de la figure 15, la note initiale 5 est attribuée à une longueur mesurée égale à 8,5 mètres.

- Un niveau de bruit est estimé pour chaque nuage de points représentant un camion. Pour estimer le bruit du nuage de points associé au camion donné, on calcule une distance entre chacun des points du nuage et le modèle linéaire trouvé pour le camion donné dans l'étape E3 par application de l'algorithme RANSAC. Le nombre de points dont la distance dépasse un seuil donné et le nombre de points supprimés par application de l'algorithme de clustering dans l'étape E3 sont utilisés pour définir le niveau de bruit du nuage de points associé au camion donné. Plus le niveau de bruit est élevé, plus la note associée à la mesure donnée est pénalisée.

- L'occlusion potentielle d'une détection du camion donné est calculée par analyse des « zones grises » du nuage de points. Les zones grises indiquent les zones dont l'état (libre ou occupé) n'est pas déterminé, et pour lesquelles aucune information issue du lidar n'est disponible. Cela se produit notamment lorsqu'un élément est situé entre le lidar et une zone donnée, l'élément empêchant alors des rayons issus du lidar d'atteindre la zone donnée, la zone donnée étant alors une zone grise. Plus la zone grise est grande, la note attribuée à la mesure donnée est abaissée.

Ce traitement permet ainsi d'associer une note à chaque mesure donnée. La mesure obtenant la note le plus élevée est alors sélectionnée.

A l'issue de l'étape E4, on obtient une vidéo annotée avec une boîte englobante en trois dimensions pour chaque camion détecté dans le trafic environnant le véhicule automobile.

Finalement, le procédé selon l'invention présente les avantages suivants.

En premier lieu, il permet de détecter les camions dans un nuage de points issus du lidar, et fournit, pour chaque camion détecté :

- les coordonnées en trois dimensions d'un centre de la boite englobante du camion,
- un cap du camion, et
- les dimensions de la boîte englobante.

De plus le procédé permet d'attribuer un identifiant de suivi à chaque détection pour garantir une cohérence temporelle des images générées.

Par ailleurs, le système est capable de corriger les dimensions des camions détectés en fonction d'informations issues de toutes les images traitées.

A noter que les traitements mis en œuvre dans le procédé selon l'invention ne nécessitent pas la mise en œuvre de réseaux de neurones. Les algorithmes mis en œuvre n'ont pas besoin d'être entrainés.

Le procédé selon l'invention permet d'augmenter la robustesse de tout processus qui repose sur la détection de camions.

L'architecture modulaire du procédé selon l'invention permet d'améliorer facilement n'importe quelle sous-tâche du procédé, par exemple en utilisant des algorithmes statistiques plus complexes, pour affiner davantage les dimensions du camion.

Le procédé selon l'invention peut également être mis en œuvre « hors ligne » sur des données issues de capteurs (au moins une caméra et un Lidar) pour déterminer les positions de boites englobantes de camions, afin de fournir automatiquement une vérité terrain (en anglais « ground truth ») utilisable pour réaliser l'apprentissage de réseaux de neurones configurer pour détecter les camions et estimer leurs dimensions.

Le procédé selon l'invention a été défini pour améliorer les détections de camions grâce à un système d'étiquetage automatique. Les tests effectués ont montré des résultats positifs, notamment le procédé selon l'invention s'est montré plus performant que des systèmes équivalents basés sur des réseaux de neurones.

## Revendications

1. Procédé de détection de camions et de modélisation d'une géométrie en trois dimensions des camions détectés dans l'environnement d'un véhicule automobile (100) équipé d'un ensemble de capteurs (20) comprenant un lidar (202) et au moins une caméra (201),
le procédé étant **caractérisé en ce qu'**il comprend des itérations des étapes suivantes :

   - une étape (E1) d'acquisition d'au moins une image (I_2D) issue d'une caméra (201), et de détection de camions (C1, C2, C3, C4) dans l'au moins une image (I_2D) comprenant une application d'un algorithme de segmentation de l'au moins une image (I_2D) afin d'obtenir des données segmentées, puis
   - une étape (E2) d'acquisition d'un nuage de points (N_3D) issus du lidar, et de filtrage du nuage de points représentant les camions identifiés (C1, C2, C3, C4) dans les données segmentées, le filtrage permettant d'obtenir une instance de nuage de points pour chaque camion identifié, puis
   - une étape (E3) de détermination de contours de chaque camion identifié, comprenant une détermination de lignes de contours (S1, S2) dans chaque instance de nuage de points filtrés.

2. Procédé de détection de camions selon la revendication précédente, **caractérisé en ce que** l'étape (E1) d'acquisition et de détection comprend la mise en œuvre d'un algorithme de suivi des camions détectés (C1, C2, C3, C4) dans des acquisitions

**3.** Procédé de détection de camions selon l'une des revendications précédentes, dans lequel les dimensions des lignes de contour déterminées sont utilisées pour déterminer une longueur et/ou une largeur et une direction de chaque camion identifié.

**4.** Procédé de détection de camions selon l'une des revendications précédentes, **caractérisé en ce qu'**il comprend en outre une étape (E4) de détermination d'une géométrie la plus probable de chaque camion (C1, C2, C3, C4) détecté comprenant une analyse statistique d'une dimension des lignes de contours (S1, S2) du camion détecté.

**5.** Procédé de détection de camions selon la revendication précédente, **caractérisé en ce que** l'analyse statistique comprend, pour chaque dimension donnée prise parmi une longueur d'un camion détecté et/ou d'une largeur d'un camion détecté et/ou une hauteur d'un camion détecté,

   - une construction d'un histogramme représentant une distribution de mesures de ladite dimension donnée dans différentes classes, puis
   - une détermination de la valeur la plus probable de ladite dimension comme étant la valeur la classe de l'histogramme qui regroupe le plus de mesures.

**6.** Procédé de détection de camions selon l'une des revendications 3 à 5, **caractérisé en ce que** l'étape de détermination d'une géométrie la plus probable d'un camion comprend la suppression des lignes de contours (S1, S2) détectées lorsque leur longueur est inférieure à une valeur limite inférieure ou supérieure à une valeur limite supérieure.

**7.** Procédé de détection de camions selon l'une des revendications 3 à 6, **caractérisé en ce que** l'étape de détermination d'une géométrie la plus probable de chaque camion détecté comprend :

   - le calcul d'un score/indice de confiance associé à chaque mesure de la dimension donnée, et
   - une détermination de la valeur la plus probable de la dimension donnée comme étant la mesure associée au score de confiance le plus élevé.

**8.** Procédé de détection de camions selon la revendication précédente, **caractérisé en ce que** le score de confiance associé à une mesure donnée d'une dimension donnée d'un camion est calculé en fonction :

   - d'un nombre total de mesures se situant dans la même classe de l'histogramme que la mesure donnée, et/ou
   - d'un niveau de bruit estimé relatif au nuage de points représentant le camion, et/ou
   - d'une proportion de points situés dans l'instance de nuage de points représentant le camion et dont le statut est indéterminé, notamment dont le statut n'est ni libre ni occupé.

**9.** Dispositif de détection de camions et de modélisation d'une géométrie des camions détectés dans l'environnement d'un véhicule automobile (100) équipé d'un ensemble de capteurs (20) comprenant un lidar (202) et au moins une caméra (201),
le dispositif comprenant des éléments matériels et/ou logiciels mettant en œuvre le procédé selon l'une des revendications 1 à 8.

**10.** Produit programme d'ordinateur comprenant des instructions de code de programme enregistrées sur un support lisible par ordinateur pour mettre en œuvre les étapes du procédé selon l'une quelconque des revendications 1 à 8 lorsque ledit programme fonctionne sur un ordinateur.

**11.** Véhicule automobile (100) comprenant un dispositif selon la revendication 9.

Fig. 1

Fig. 2

Fig. 3

Fig. 4

B4    ID4

E1

# Fig. 5

B6    B6 B6    B6

E1

# Fig. 6

I_3D  I_3D  I_3D_3D  I_3D

E1

## Fig. 7

1

D1

## Fig. 8

2

D2

Fig. 9

Z1

z

y

x

Y1

X1

Fig. 10

Fig. 11

Fig. 12

Fig. 13

Point extrême

P2

Point d'ancrage

P1

Y1

X1

## Fig. 14

histogramme de longueurs

Y2

12

10

8

6

4

2

0

[3,4] (4,5] (5,6] (6,7] (7,8] (8,9] (9,10] (10,11] (11,12] (12,13] (13,14] (14,15] (15,16] (16,17] (17,18] (18,19] (19,20] 20,21] X2

intervalles de longueurs

## Fig. 15

Europäisches
Patentamt

European
Patent Office

Office européen
des brevets

## RAPPORT DE RECHERCHE EUROPEENNE

Numéro de la demande

EP 25 19 6010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2023/257000 A1 (BELTRAN DE LA CITA JORGE [ES] ET AL) 17 août 2023 (2023-08-17) * alinéa [0034] - alinéa [0094]; figures 1-4 * | 1-11 | INV. G06V20/58 G06V20/64 |
| A | JIE SHEN ET AL: "Monocular 3D object detection for construction scene analysis", COMPUTER-AIDED CIVIL AND INFRASTRUCTURE ENGINEERING, BLACKWELL PUBLISHERS, MALDEN, US, vol. 39, no. 9, 20 décembre 2023 (2023-12-20), pages 1370-1389, XP072621578, ISSN: 1093-9687, DOI: 10.1111/MICE.13143 * page 1370, alinéa 1 - page 1387, colonne 1, alinéa 1; figures 1-7; tableaux 1-7 * | 1-11 | |

DOMAINES TECHNIQUES RECHERCHES (IPC)

G06V

Le présent rapport a été établi pour toutes les revendications

| Lieu de la recherche | Date d'achèvement de la recherche | Examinateur |
|---|---|---|
| La Haye | 7 janvier 2026 | Thibault, Guillaume |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

# EP 4 712 049 A1

## ANNEXE AU RAPPORT DE RECHERCHE EUROPEENNE
## RELATIF A LA DEMANDE DE BREVET EUROPEEN NO.

EP 25 19 6010

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-01-2026

| Document brevet cité au rapport de recherche | Date de publication | Membre(s) de la famille de brevet(s) | Date de publication |
|---|---|---|---|
| US 2023257000 A1 | 17-08-2023 | EP 4176286 A1 | 10-05-2023 |
| | | FR 3112215 A1 | 07-01-2022 |
| | | KR 20230031344 A | 07-03-2023 |
| | | US 2023257000 A1 | 17-08-2023 |
| | | WO 2022002531 A1 | 06-01-2022 |

Pour tout renseignement concernant cette annexe : voir Journal Officiel de l'Office européen des brevets, No.12/82